# EUROPEAN PATENT APPLICATION

(11) **EP 4 792 777 A1**
(43) Date of publication of application: **19.08.2026**
(21) Application number: 26151266.9
(22) Date of filing: 12.01.2026
(51) Int. Cl.: A61C 8/02, A61C 8/00

(54) **FIXTURE STABILIZING DEVICE FOR DENTAL IMPLANTS**

(30) Priority: 13.02.2025 US 202519053389
(71) Applicant: Cho, Jaewoo, Los Angeles, CA 90004 (US)
(72) Inventor: Cho, Jaewoo, Los Angeles, CA 90004 (US)
(74) Representative: Patentanwälte Hemmer Lindfeld Frese Partnerschaft mbB

(57) **Abstract**

A fixture stabilizing device for dental implants includes a fixture detachable coupling part detachably coupled to a fixture placed in an alveolar bone during a dental implant procedure, and a residual bone coupling part connected to the fixture detachable coupling part and coupled to a region of a residual bone forming one side of gum at an opposite side of the fixture.

## Description

### BACKGROUND

### 1. Field

The disclosure relates to a fixture stabilizing device for dental implants, and more particularly, to a fixture stabilizing device for dental implants, which may stably and effectively anchor a fixture by placing the fixture such that the platform position of the fixture is equal to or at least deeper than the limiting position of the residual bone, thereby eliminating the conventional needs to use larger or longer fixtures, to wait a longer period after bone grafting or maxillary sinus augmentation, to wait until after extraction site heals enough to obtain enough bone density to allow for implant placements, to wait after removal of an existing implant fixture, or to perform multiple surgeries for ideal surgical results so that the inconvenience of patients and procedure operators may be reduced and the success rate of implant procedures may be significantly increased compared to the conventional cases.

### 2. Description of the Related Art

A dental implant is a substitute that replaces the original human tissue when it is lost. However, dentistry defines an implant as a series of procedures to implant a man-made tooth.

In a process of placing a dental implant, first, a drill is used to drill a hole for a fixture. Then, the fixture is placed in the alveolar bone and osseointegrated with the alveolar bone to create an artificial root or supporting structure for the dental prostheses to be placed on. After a period of time, when the fixture has finished osseointegrating, an abutment is connected to the fixture, and then tightened with the abutment threads so that the fixture and abutment become one connected piece.

The implant procedure can then be completed by cementing a final prosthesis, or a crown, to the abutment, which has the same shape as the natural tooth. When the gums need to be shaped to allow for healing before the crown is placed, a healing abutment can be pre-connected to the fixture. This healing abutment can be used temporarily to allow for sufficient bone and gum healing until the crown is placed.

The procedure described above is very common and conventional methods of dental implant procedures in dentistry.

However, when there is a lack of bone volume or density in the upper or lower jaw, especially in the maxilla, a maxillary sinus augmentation should be performed to increase the available bone volume to place the dental implant into, in order for the implant procedure to proceed. For reference, maxillary sinus augmentation procedure and implant fixture placement should ideally be performed at the same time.

However, the lack of residual bone thickness at the time of maxillary sinus elevation makes it difficult or impossible to achieve adequate fixture placement depth. This can cause discomfort and complications, as the patient may have to wait 3 to 6 months after the maxillary sinus augmentation and sufficient osteogenesis by the body to generate enough sound bone volume and density to be able to place the dental implant, and then wait another 3 to 6 months for the implant to osseointegrate.

Also, when performing a maxillary sinus bone graft or maxillary sinus augmentation, it is very difficult or impossible to augment the maxillary sinus just enough to fit the entire fixture while avoiding overgrafting and undergrafting the maxillary sinus. In some cases, excessive amount of bone grafting beyond what is needed to house the implant fixtures can lead to blockage of the ostium and sinus infection, excessive graft material can also result in grafted area to have poor quality or density of the bone, or excessive grafting can prolong the period of osteogenesis by months. On the other hand, in some cases, undergrafting the maxillary sinus than required may result in the need to perform a second maxillary sinus augmentation surgery at the time of the fixture placement. Additionally, in some cases, the inability to simultaneously place the dental implant fixture at the same time as the maxillary sinus augmentation may result in much less bone volume generation than the amount of the graft material placed or how much the maxillary sinus membrane was elevated due to the loss of the "tenting" effect of the apical portion of the implant fixture.

Additionally, it has been known that the use of general sized fixtures is difficult or fixture placement itself is impossible in the following situations.

First, when there is insufficient residual bone volume in the extraction socket, it is inevitable that longer or thicker fixtures will be used to achieve anchorage or stability in the bone.

Secondly, when the bone quality is too soft or the space is hollow (similar to the maxillary sinus) immediately below the dense cortical bone of the mandibular ridge, and the ideal implant fixture platform level to be positioned below the cortical bone, it is either very difficult or impossible to place standard size dental implant fixtures in such a site.

Third, when overdrilling due to misjudgment of bone quality or the bone quality is too soft or poor, it is necessary to use longer and/or wider implant fixtures than the predicted fixtures, which sometimes leads to aborting the surgery to place dental implants when longer and/or wider fixtures are not available due to inventory management issues.

Fourth, after removal of the existing implant, a longer or wider implant fixture must be applied into the empty space previously occupied by the removed implant fixture.

Considering the situations described above, it is widely accepted in dental research that one of the most important things to consider when placing a dental implant fixture is the overall thickness of the gum and residual bone above the implant platform level. This is because a thickness of about at least 3 mm to 4 mm (a total thickness of gum and the residual bone combined) is required above the platform of the fixture to minimize the risk of bone loss around the dental implants.

In the cases of thin gums and/or thin residual alveolar bone availability, the operator (dentist) is often limited to shallower than ideal fixture placement, which significantly increases the risk of bone resorption around the top of the fixture, or grafting first waiting for months to generate more bone and perform another surgery to place the implants at a more favorable platform depth.

As described, while it is often necessary to place the implant fixture platform level to be deeper than the limit of the residual bone to obtain the ideal distance from the gingival margin above, there is currently no device available to make this possible. Hence, currently in implant dentistry, there is a need for a new type of dental implant fixture stabilizing device (DIFSD) to solve these problems mentioned above.

### SUMMARY

Provided is a fixture stabilizing device for dental implants, which may stably and effectively anchor a fixture by placing the fixture such that the platform position of the fixture is equal to or at least deeper than the limiting position of the residual bone, thereby eliminating the conventional needs to use larger or longer fixtures, to wait a longer period after bone grafting or maxillary sinus augmentation, to wait until after extraction site heals enough to obtain enough bone density to allow for implant placements, to wait after removal of an existing implant fixture, or to perform multiple surgeries for ideal surgical results so that the inconvenience of patients and procedure operators may be reduced and the success rate of implant procedures may be significantly increased compared to the conventional cases.

According to an aspect of the disclosure, a fixture stabilizing device for dental implants includes a fixture detachable coupling part detachably coupled to a fixture placed in an alveolar bone during a dental implant procedure, and a residual bone coupling part connected to the fixture detachable coupling part and coupled to a region of a residual bone forming one side of gum at an opposite side of the fixture.

The fixture may be placed such that a platform position of the fixture is equal to or at least deeper than a limit position of the residual bone, and the fixture detachable coupling part may be coupled to the fixture placed at a corresponding position and the residual bone coupling part may be coupled to the region of the residual bone so as to fix and support the fixture.

The residual bone coupling part may include a device body inserted through a placement hole, through which the fixture may be placed, and arranged in the residual bone, and a residual bone contact support part formed on an outer surface of the device body and supported by contact with the residual bone.

The residual bone contact support part may be processed to protrude outwards from the outer surface of the device body in a radius direction to have a continuous spiral shape.

The residual bone contact support part having a continuous spiral shape may be formed to have a thread width gradually decreasing toward the fixture detachable coupling part.

The residual bone contact support part may be formed in a partial section of an outer surface of the device body.

The residual bone contact support part may be formed in an entire section of an outer surface of the device body.

An end surface forming a smallest area in the device body may be greater than an end surface of the residual bone coupling part forming a largest area.

The outer surface of the device body may have a non-linear shape.

At least a partial section of the outer surface of the device body may form a tapered outer wall with a cross-sectional area gradually decreasing toward the fixture detachable coupling part.

A tool insertion part, into which a tool for fastening the fixture detachable coupling part to the fixture is inserted, may be formed in a central area of an end portion of the device body.

An end portion of the device body in contact with the fixture detachable coupling part may form a platform contact support part that is supported by contact with a platform of the fixture.

An exposed end portion of the residual bone coupling part may be arranged in the residual bone.

The fixture stabilizing device for dental implants may further include a healing body that may be coupled to the residual bone coupling part and arranged such that an exposed end portion of the healing body is exposed to outside the gum.

An end surface forming a smallest area of the healing body may be greater than an end surface forming a largest area of the residual bone coupling part.

The healing body may include a tapered healing body with a tapered outer surface.

The fixture detachable coupling part may include a threaded coupling part that may be formed inside a body part of the fixture and coupled in a screw-like manner to a threaded coupling section of a device coupling part to which the fixture detachable coupling part is detachably coupled.

The fixture detachable coupling part may further include an unthreaded coupling part that may be coupled to an unthreaded coupling section of the device coupling part formed inside the body part of the fixture to be pressed by contact with the unthreaded coupling section.

The unthreaded coupling part may have a conic shape with a cross-sectional area gradually decreasing toward the threaded coupling part.

The fixture detachable coupling part may include a connection part connecting the threaded coupling part to the unthreaded coupling part, and an unthreaded protruding portion forming an end portion of the threaded coupling part and being unthreaded.

### BRIEF DESCRIPTION OF THE DRAWINGS

Exemplary embodiments of the disclosure will be more clearly understood from the following detailed description taken in conjunction with the accompanying drawings in which:
Exemplary embodiments of the disclosure will be more clearly understood from the following detailed description taken in conjunction with the accompanying drawings in which:
FIG. 1 is a perspective view of a fixture stabilizing device for dental implants according to an embodiment;
FIGS. 2 to 4 are views showing, at different angles, the fixture stabilizing device for dental implants of FIG. 1;
FIG. 5 is a view showing an arrangement between the fixture stabilizing device for dental implants of FIG. 1 and a fixture;
FIG. 6 is a cross-sectional view of the fixture of FIG. 5;
FIG. 7 is a view showing a schematic use state of the fixture stabilizing device for dental implants of FIG. 1;
FIG. 8 is a perspective view of a fixture stabilizing device for dental implants according to another embodiment;
FIG. 9 is a front view of the fixture stabilizing device for dental implants of FIG. 8;
FIG. 10 is a view showing a schematic use state of the fixture stabilizing device for dental implants of FIG. 8;
FIG. 11 is a perspective view of a fixture stabilizing device for dental implants according to another embodiment;
FIG. 12 is a front view of the fixture stabilizing device for dental implants of FIG. 11;
FIG. 13 is a view showing a schematic use state of the fixture stabilizing device for dental implants of FIG. 11;
FIG. 14 is a perspective view of a fixture stabilizing device for dental implants according to another embodiment;
FIG. 15 is a front view of the fixture stabilizing device for dental implants of FIG. 14;
FIG. 16 is a view showing a schematic use state of the fixture stabilizing device for dental implants of FIG. 14;
FIG. 17 is a perspective view of a fixture stabilizing device for dental implants according to another embodiment;
FIG. 18 is a front view of the fixture stabilizing device for dental implants of FIG. 17;
FIG. 19 is a perspective view of a fixture stabilizing device for dental implants according to another embodiment;
FIG. 20 is a front view of the fixture stabilizing device for dental implants of FIG. 19;
FIG. 21 is a perspective view of a fixture stabilizing device for dental implants according to another embodiment;
FIG. 22 is a front view of the fixture stabilizing device for dental implants of FIG. 21;
FIG. 23 is a perspective view of a fixture stabilizing device for dental implants according to another embodiment; and
FIG. 24 is a front view of the fixture stabilizing device for dental implants of FIG. 23.

### DETAILED DESCRIPTION OF THE EXEMPLARY EMBODIMENTS

Embodiments of the disclosure are described in detail with reference to the accompanying drawings. However, the disclosure is not limited thereto and it will be understood that various changes in form and details may be made therein without departing from the spirit and scope of the following claims. That is, descriptions on particular structures or functions may be presented merely for explaining embodiments of the disclosure.

62] As the disclosure allows for various changes and numerous embodiments, embodiments will be illustrated in the drawings and described in detail in the written description. Throughout the drawings, like reference numerals denote like elements.

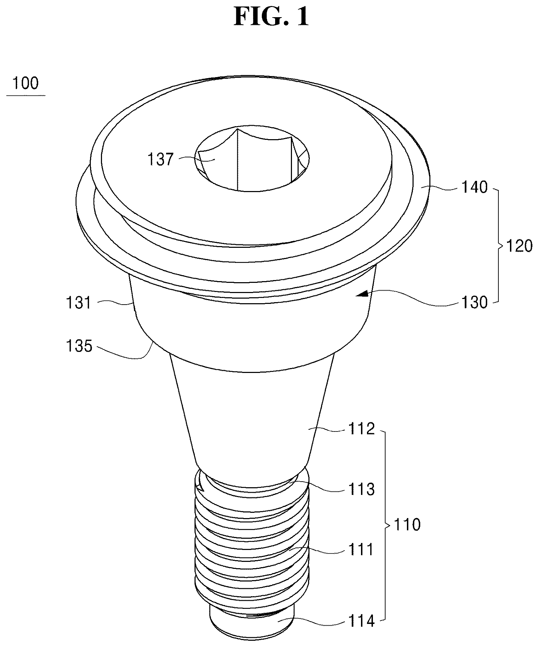

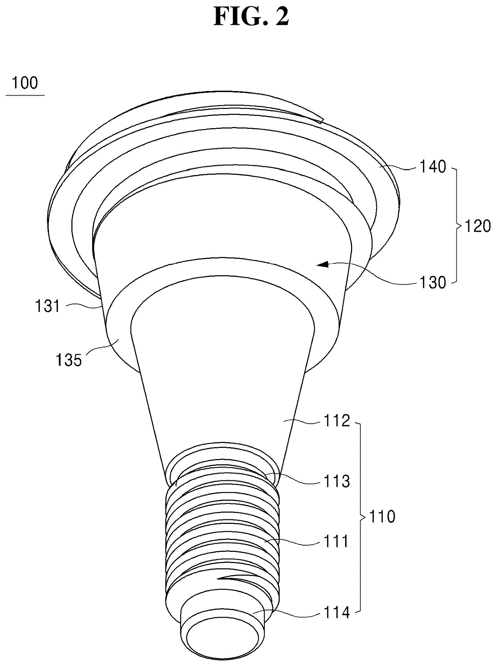

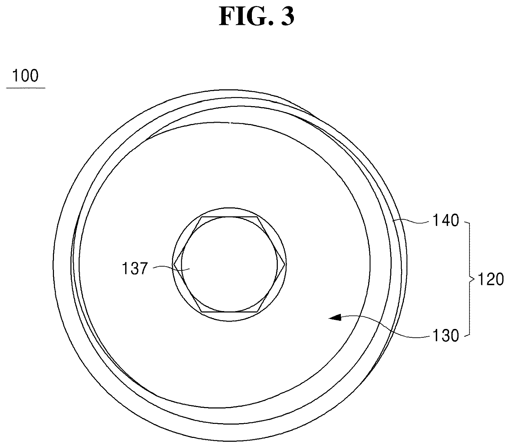

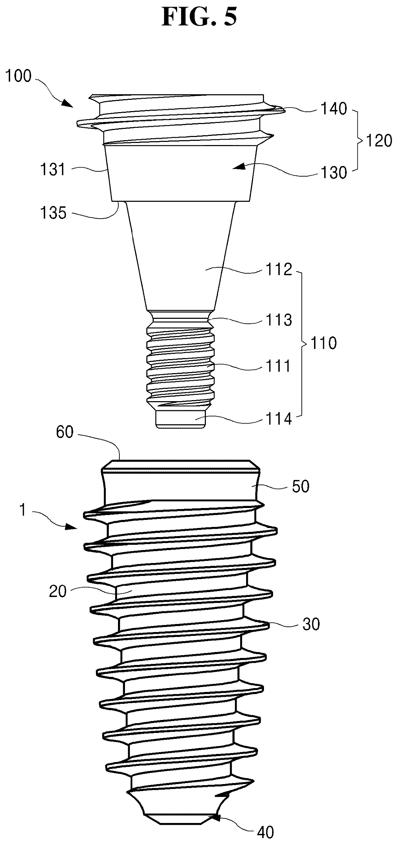

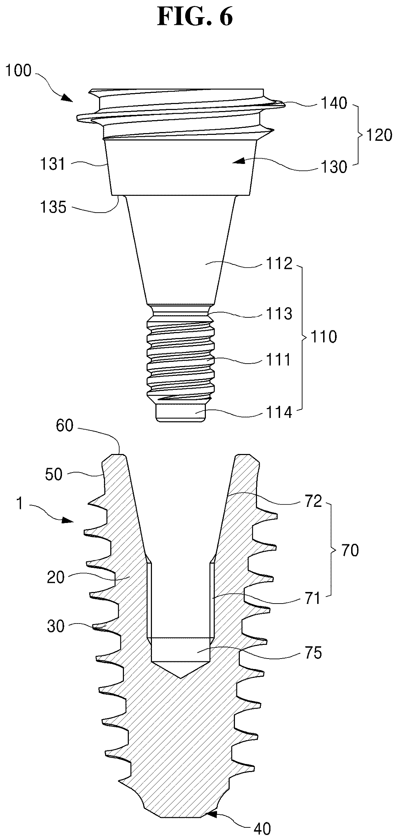

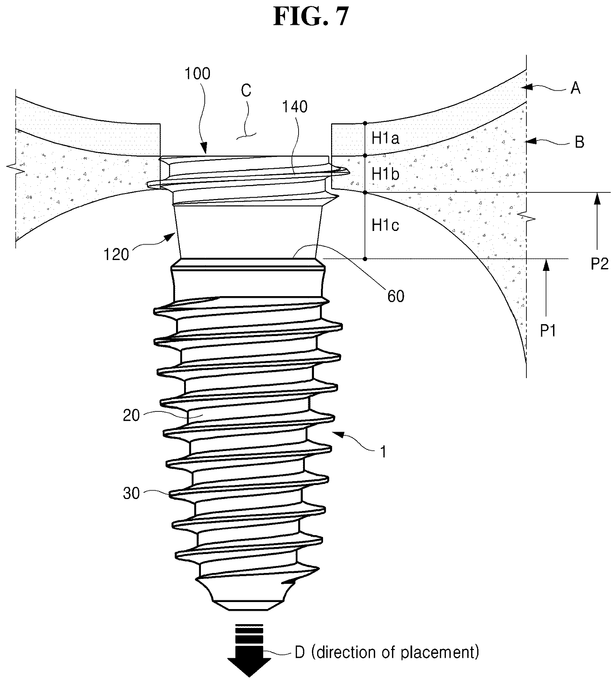

FIG. 1 is a perspective view of a fixture stabilizing device 100 for dental implants according to an embodiment. FIGS. 2 to 4 are views showing, at different angles, the fixture stabilizing device 100 for dental implants of FIG. 1. FIG. 5 is a view showing an arrangement between the fixture stabilizing device for dental implants 100 of FIG. 1 and a fixture. FIG. 6 is a cross-sectional view of the fixture of FIG. 5. FIG. 7 is a view showing a schematic use state of the fixture stabilizing device 100 for dental implants of FIG. 1.

Referring to the drawings, the fixture stabilizing device 100 for dental implants according to the present embodiment may stably and effectively anchor a fixture 1 by placing the fixture 1 in a placement direction (see D of FIG. 7) such that the position of a platform 60 (see a platform position P1 of FIG. 7) of the fixture 1 is equal to or at least deeper than a limiting position P2 (see FIG. 7) of a residual bone B. The limit position P2 of the residual bone B may indicate a position of the residual bone B, which is the end in the direction in which the fixture 1 is placed, of the residual bone formed in the area where the fixture 1 is placed.

When the fixture stabilizing device 100 for dental implants according to the present embodiment is in use, the conventional needs to use larger or longer fixtures, to wait a longer period after bone grafting or maxillary sinus augmentation, to wait until after extraction site heals enough to obtain enough bone density to allow for implant placements, to wait after removal of an existing implant fixture, or to perform multiple surgeries for ideal surgical results may be eliminated so that the inconvenience of patients and procedure operators may be reduced and the success rate of implant procedures may be significantly increased compared to the conventional cases.

As described above, for successful implant procedures, the fixture 1 is placed with a thickness of about at least 3 mm to 4 mm above the platform 60 of the fixture 1, which leads to excellent bone resorption above the fixture 1 and thus successful implant procedures.

However, when a patient has an abnormal oral cavity structure in which thicknesses H1a and H1b of gum A and the residual bone B are too thin, as shown in FIG. 7, for example, the thickness H1a of the gum A is 1 mm and the thickness H1b of the residual bone B thereunder is 1 mm, originally, the fixture 1 had to be placed shallowly to match the position of the residual bone B. However, when the fixture 1 is placed thinly, the thickness of about at least 3 mm to 4 mm above the platform 60 of the fixture 1 may not be secured so that the bone resorption above the fixture 1 may be vulnerable. Then, the implant procedure is highly likely to fail. Accordingly, according to the related art, instead of using the general fixture 1, a larger or longer fixtures (not shown) need to be used, and it is necessary to wait a longer period after bone grafting or maxillary sinus augmentation, to wait until after extraction site heals enough to obtain enough bone density to allow for implant placements, to wait after removal of an existing implant fixture, or to perform multiple surgeries for ideal surgical results.

However, unlike the related art, by using the fixture stabilizing device 100 for dental implants according to the present embodiment, the above problems may be clearly solved. In other words, as shown in FIG. 7, even when a patient has an oral cavity structure in which the thickness H1a of the gum A is 1 mm and the thickness H1b of the residual bone B thereunder is 1 mm, in order to secure the thickness of about at least 3 mm to 4 mm above the platform 60 of the fixture 1 and to make the platform position P1 of the fixture 1 deeper than the limit position P2 of the residual bone B, the fixture 1 is placed in the placement direction D, and then, the fixture stabilizing device 100 for dental implants according to the present embodiment is fastened to the fixture 1. Hence, the thickness of about at least 3 mm to 4 mm of the sum of the thickness H1a of the gum A 1 mm, the thickness H1b of the residual bone B of 1 mm, and a thickness H1c of the lower empty space of the residual bone B of about 2 mm may be formed above the platform 60 of the fixture 1.

As a result, the fixture stabilizing device 100 for dental implants according to the present embodiment supports the fixture 1 while one side of the fixture stabilizing device 100 for dental implants is fixed to the residual bone B and the other side thereof connected to the fixture 1. The fixture stabilizing device 100 for dental implants is an auxiliary device to secure the thickness of about at least 3 mm to 4 mm above the platform 60 of the fixture 1. After time passes, when osseointegration around the fixture 1 is completed, for example, the lower empty space of the residual bone B is filled with bone and integrated with each other, the fixture stabilizing device 100 for dental implants according to the present embodiment is removed and a typical abutment is fastened to the fixture 1.

The fixture stabilizing device 100 for dental implants according to the present embodiment with such effects may largely include a fixture detachable coupling part 110 and a residual bone coupling part 120.

First of all, the fixture detachable coupling part 110 is a part that is detachably coupled to the fixture 1 placed in the alveolar bone during a dental implant procedure. In other words, when the fixture 1 is placed in the alveolar bone through a placement hole C and then the fixture stabilizing device 100 for dental implants is fastened to the fixture 1, the fixture detachable coupling part 110 of the fixture stabilizing device 100 for dental implants is connected to the fixture 1.

Before explaining the fixture detachable coupling part 110, the fixture 1 is described with reference to FIGS. 5 to 7.

The fixture 1 is a threaded metal structure to be placed in the alveolar bone. The fixture 1 may include a body part 20 and a thread part 30 formed on the outer surface of the body part 20.

The body part 20 forms a main stem of the fixture 1. As shown in FIG. 7, as the fixture 1 is placed downwards into the alveolar bone direction, to facilitate placement, the outer surface of the body part 20 is tapered with a cross section gradually decreasing in the placement direction. While the outer surface of the body part 20 forms a cylindrical structure, as in the present embodiment, when the outer surface of the body part 20 has a tapered shape, the placement may be made very easily.

An entrance direction guide part 40 is formed in one end portion of the body part 20. The entrance direction guide part 40 is formed by a predetermined section from the tip end portion of the body part 20 in the longitudinal direction of the body part 20 with respect to the direction in which the body part 20 is placed, thereby guiding an initial placement entrance direction of the body part 20.

The entrance direction guide part 40 is not necessarily formed, but when the entrance direction guide part 40 is formed, at the initial placement of the fixture 1, the initial placement direction of the fixture 1 may be prevented from being changed. Accordingly, it is advantageous that the fixture 1 is correctly placed at a desired position.

A bone damage preventing part 50 is formed in the other end portion of the body part 20 opposite to the entrance direction guide part 40. The bone damage preventing part 50 is a portion formed on the outer wall of an opening portion of the body part 20, forming an unthreaded section. In other words, in the other end portion of the body part 20, an unthreaded section in which the thread part 30 does not exit is the bone damage preventing part 50.

The bone damage preventing part 50 is not necessarily formed, but when the bone damage preventing part 50 is formed, it is advantageous that an entrance portion of a hole into which the fixture 1 is placed may be prevented from being damaged by the thread part 30. The bone damage preventing part 50 has a tapered structure like the outer surface of the body part 20.

The end portion of the body part 20 where the bone damage preventing part 50 is formed forms the platform 60. The platform 60 forms a flat place in the end portion of the body part 20. The platform 60 provides a strong fixing force with the fixture stabilizing device 100 for dental implants when the fixture stabilizing device 100 for dental implants according to the present embodiment is fastened (coupled) to the fixture 1.

In the structure of the fixture 1, a device coupling part 70 coupled to the fixture stabilizing device 100 for dental implants according to the present embodiment is formed inside the body part 20.

The device coupling part 70 may include a threaded coupling section 71 that is threaded and an unthreaded coupling section 72 that is unthreaded and forms a strong contact coupling surface with the fixture stabilizing device 100 for dental implants. In this state, the unthreaded coupling section 72 takes a funnel structure with a width gradually decreasing toward the threaded coupling section 71.

Regarding the fixture 1 described above with reference to FIGS. 5 to 7, the disclosure is not limited thereto, and a fixture (not shown) having a different shape and structure from the fixture 1 may be used. In other words, the shape, size, etc. of the fixture 1 may be changed without limit depending on the patient's oral cavity conditions, and the disclosure is not limited to the shapes illustrated in the drawings.

As described above, the fixture 1 may be placed in the placement direction D such that the platform position P1 of the fixture 1 (see FIG. 7) is equal to or at least deeper than the limit position P2 of the residual bone B (see FIG. 7), and as the fixture stabilizing device 100 for dental implants according to the present embodiment is coupled to the fixture 1 placed as such, the fixture 1 may be supported, and the thickness of about at least 3 mm to 4 mm above the platform 60 of the fixture 1 may be secured.

The fixture detachable coupling part 110 of the fixture stabilizing device 100 for dental implants according to the present embodiment may be detachably coupled to the fixture 1. In other words, when the fixture stabilizing device 100 for dental implants is fastened to the fixture 1 after the fixture 1 is placed in the alveolar bone through the placement hole C, the fixture detachable coupling part 110 of the fixture stabilizing device 100 for dental implants is connected to the fixture 1. The fixture detachable coupling part 110 may include a threaded coupling part 111 and an unthreaded coupling part 112.

The threaded coupling part 111 is coupled, in a screw-like manner, to the threaded coupling section 71 of the device coupling part 70 formed inside the body part 20 of the fixture 1. Accordingly, the thread width, size, etc. of the threaded coupling part 111 are substantially the same as those of the threaded coupling section 71 of the device coupling part 70.

An unthreaded protruding portion 114 is provided in the end portion of the threaded coupling part 111. The outer surface of the unthreaded protruding portion 114 is unthreaded, and the unthreaded protruding portion 114 is arranged in a protrusion accommodation part 75 of the fixture 1, as shown in in FIG. 6.

The unthreaded coupling part 112 is coupled to the unthreaded coupling section 72 of the device coupling part 70 formed inside the body part 20 of the fixture 1 to be pressed by contact with the unthreaded coupling section 72. The unthreaded coupling part 112 and the unthreaded coupling section 72 takes a strong contact coupling manner, not in a screw-like manner.

The unthreaded coupling part 112 has a conic shape with a cross section gradually decreasing toward the threaded coupling part 111. Accordingly, when the fixture detachable coupling part 110 is coupled to the fixture 1, the coupling may be made easier while introducing strong bond.

The threaded coupling part 111 and the unthreaded coupling part 112 are connected to each other by a connection part 113. The connection part 113 is not a separate structure and may be a portion that is naturally generated when the threaded coupling part 111 and the unthreaded coupling part 112 are integrally processed.

Next, the residual bone coupling part 120 is connected to the fixture detachable coupling part 110. The residual bone coupling part 120 is coupled to a region of the residual bone B forming one side of the gum A at the opposite side of the fixture 1.

In the present embodiment, as the fixture detachable coupling part 110 of the fixture stabilizing device 100 for dental implants is coupled to the fixture 1 already placed in the alveolar bone, and at the opposite side, the residual bone coupling part 120 is arranged and coupled to the region of the residual bone B, there is no need to use an unnecessarily large and long fixture (not shown). Furthermore, there is no need to repeat surgeries multiple times or wait long after placing a fixture (not shown) relatively deep.

The residual bone coupling part 120 may include a device body 130 and a residual bone contact support part 140 formed on the outer surface of the device body 130 and supported by contact with the residual bone B.

As shown in FIG. 7, an exposed end portion of the residual bone coupling part 120 is arranged in the residual bone B. In other words, when the fixture stabilizing device 100 for dental implants according to the present embodiment is fastened to the fixture 1 is already placed, the placement hole C is exposed. In this state, the exposed portion may be covered with a separate cover.

The device body 130 is arranged in the residual bone B after the fixture 1 is placed through the placement hole C. All parts except for the residual bone contact support part 140 belong to the device body 130.

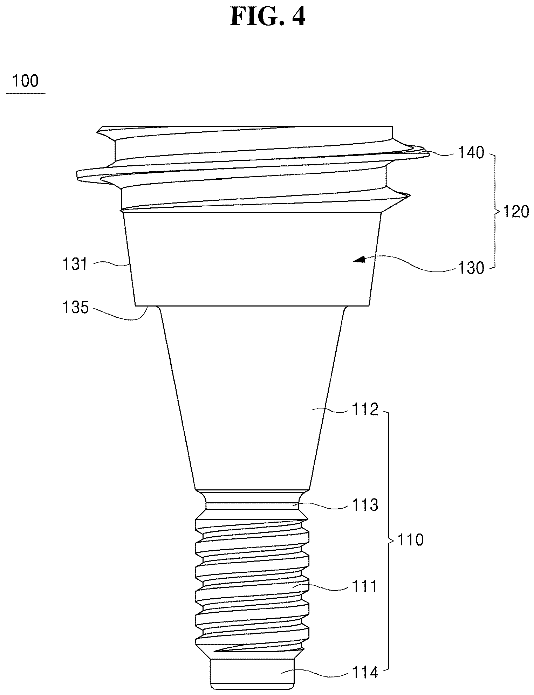

As shown in an enlarged view of FIG. 4, in the present embodiment, the outer surface of the device body 130 has a non-linear shape. At least any one section of the outer surface of the device body 130 forms a tapered outer wall 131 with a cross section gradually decreasing toward the fixture detachable coupling part 110. But the tapered outer wall 131 may be an outer wall of parallel cylindrical shape.

In the present embodiment, the outer surface of the device body 130 in the area other than the residual bone contact support part 140 forms the tapered outer wall 131 with a cross section gradually decreasing toward the fixture detachable coupling part 110. As in the present embodiment, when the tapered outer wall 131 is formed, a space may be formed with the residual bone B. Thus, through the space, bone may be implanted, or bone may grow well therein. Accordingly, the success rate of implant procedures may increase.

The cross-sectional area that forms the smallest cross-sectional area in the device body 130 forming the tapered outer wall 131 is greater than the cross-sectional area that forms the largest cross-sectional area of the fixture detachable coupling part 110. Accordingly, strong, not relatively weak, bond with the residual bone B may be introduced through the residual bone contact support part 140.

A tool insertion part 137, into which a tool for fastening the fixture 1 to the fixture detachable coupling part 110, is formed in a central area of an end portion of the device body 130. The tool insertion part 137 has a polygonal wrench hole structure. The wrench hole may be hexagonal or octagonal.

The end portion of the device body 130 in contact with the fixture detachable coupling part 110 forms a platform contact support part 135 that is supported by contact with the platform 60 of the fixture 1. Accordingly, when the fixture stabilizing device 100 for dental implants is fastened to the fixture 1 by inserting a tool into the tool insertion part 137, the fixture stabilizing device 100 for dental implants should be strongly fastened to the fixture 1 until the platform contact support part 135 is supported by contact with the platform 60, thereby preventing the phenomenon of random loosening of fastening.

The residual bone contact support part 140 is formed on the outer surface of the device body 130 and supported by contact with the residual bone B. In other words, as the residual bone contact support part 140 is substantially supported by contact with the residual bone B, an anchoring force may be introduced.

The residual bone contact support part 140 is processed to protrude from the outer surface of the device body 130 outwards in a radial direction. In particular, in the present embodiment, the residual bone contact support part 140 has a continuous spiral shape.

In this state, the residual bone contact support part 140 having a continuous spiral shape is formed such that a thread width thereof gradually decreases toward the fixture detachable coupling part 110. Accordingly, it is advantageous that the residual bone contact support part 140 is supported by contact with the residual bone B. Furthermore, workability is improved.

In the present embodiment, the residual bone contact support part 140 having a continuous spiral shape is formed in a partial section of the outer surface of the device body 130. In other words, the residual bone contact support part 140 is processed into the spiral shape in one or two lines on the outer surface of the device body 130 neighboring the tool insertion part 137.

Hereinafter, the operation of the fixture stabilizing device 100 for dental implants according to the present embodiment is described.

As shown in FIG. 7, even for a patient with the thickness H1a of the gum A of 1 mm and the thickness H1b of the residual bone B thereunder of 1 mm, first, the fixture 1 is placed in the placement direction D such that, while securing a thickness of about at least 3 mm to 4 mm above the platform 60 of the fixture 1, the platform position P1 of the fixture 1 may be deeper than the limit position P2 of the residual bone B. Then, the thickness of about at least 3 mm to 4 mm that is the sum of the thickness H1a of the gum A of 1 mm, the thickness H1b of the residual bone B of 1 mm, and the thickness H1c of the lower empty space of the residual bone B of 2 mm may be formed above the platform 60 of the fixture 1.

Next, the fixture stabilizing device 100 for dental implants according to the present embodiment is fastened to the fixture 1. In other words, the fixture detachable coupling part 110 is coupled to the fixture 1 is already placed such that the residual bone coupling part 120 is coupled to the region of the residual bone B. It is not necessary to have the whole of the residual bone contact support part 140 is coupled to the residual bone B, and it is sufficient that only a part of the residual bone contact support part 140 is coupled to the residual bone B.

As a result, the thickness of about at least 3 mm to 4 mm above the platform 60 of the fixture 1 may be secured. When osseointegration around is completed as time passes, the fixture stabilizing device 100 for dental implants according to the present embodiment is removed, and a typical abutment is fastened thereto.

For reference, unlike the conditions in FIG. 7, even for a patient with the thickness H1a of the gum A of 2 mm or 3 mm, not 1 mm, the fixture 1 is placed to secure the thickness of about at least 3 mm to 4 mm above the platform 60 of the fixture 1, and then, the fixture stabilizing device 100 for dental implants according to the present embodiment is used.

According to the present embodiment that operates with the structure described above, the fixture 1 may be placed in the placement direction D and stably and effectively anchored such that the platform position P1 of the fixture 1 is equal to or at least deeper than the limit position P2 of the residual bone B. Accordingly, the conventional needs to use larger or longer fixtures, to wait a longer period after bone grafting or maxillary sinus augmentation, to wait until after extraction site heals enough to obtain enough bone density to allow for implant placements, to wait after removal of an existing implant fixture, or to perform multiple surgeries for ideal surgical results may be eliminated so that the inconvenience of patients and procedure operators may be reduced and the success rate of implant procedures may be significantly increased compared to the conventional cases.

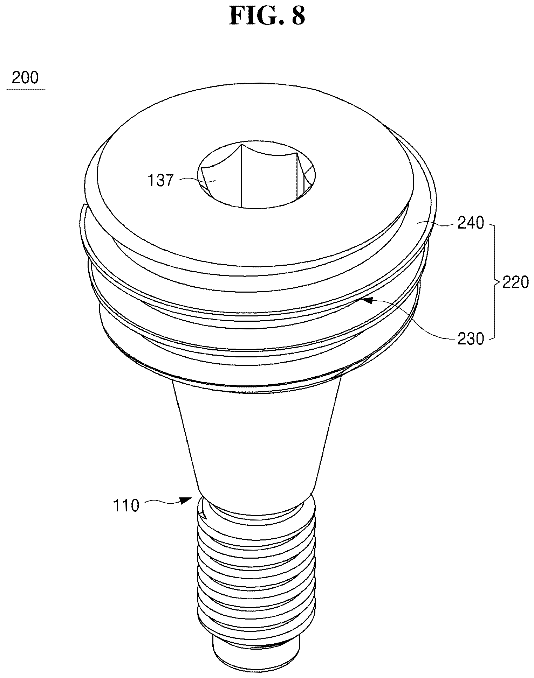

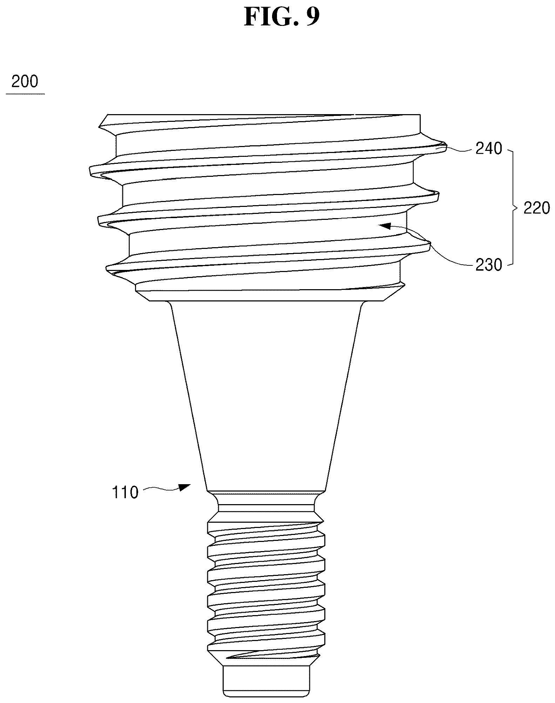

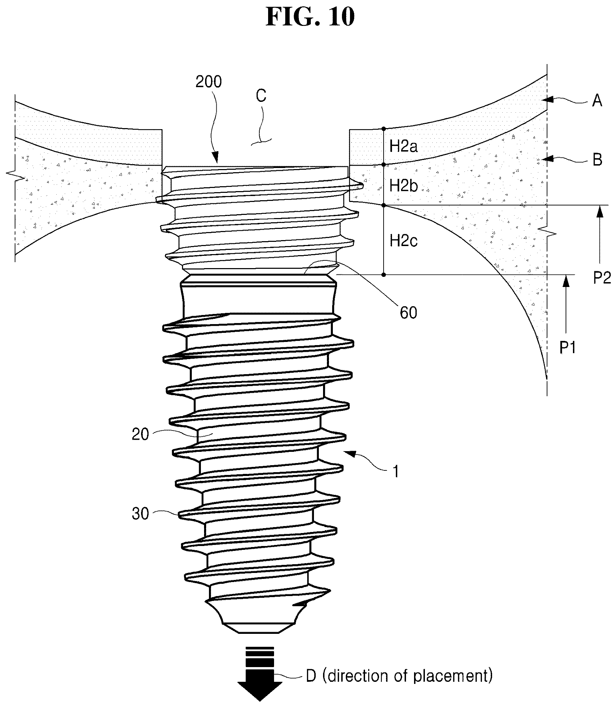

FIG. 8 is a perspective view of a fixture stabilizing device 200 for dental implants according to another embodiment. FIG. 9 is a front view of the fixture stabilizing device 200 for dental implants of FIG. 8. FIG. 10 is a view showing a schematic use state of the fixture stabilizing device 200 for dental implants of FIG. 8.

Referring to these drawings, the fixture stabilizing device 200 for dental implants according to the present embodiment may also include the fixture detachable coupling part 110 detachably coupled to the fixture 1 placed in the alveolar bone during a dental implant procedure, and a residual bone coupling part 220 connected to the fixture detachable coupling part 110 and coupled to the region of the residual bone B forming one side of the gum A at the opposite side of the fixture 1. The structure, function, and role of the fixture detachable coupling part 110 are the same as those of the embodiment described above. Accordingly, redundant descriptions thereof are omitted.

However, the residual bone coupling part 220 applied to the present embodiment differs from the residual bone coupling part 120 of the embodiment described above. In other words, the residual bone coupling part 220 applied to the present embodiment may also include a device body 230 and a residual bone contact support part 240. The residual bone contact support part 240 having a continuous spiral shape is formed on the entire section of the outer surface of the device body 230.

Even when the residual bone contact support part 240 is formed in the entire section of the outer surface of the device body 230, the residual bone contact support part 240 is not entirely supported by contact with the residual bone B.

Hereinafter, the operation of the fixture stabilizing device 200 for dental implants according to the present embodiment is described.

As shown in FIG. 10, even for a patient with the thickness H2a of the gum A of 1 mm and the thickness H2b of the residual bone B thereunder of 1 mm, first, the fixture 1 is placed in the placement direction D such that, while securing a thickness of about at least 3 mm to 4 mm above the platform 60 of the fixture 1, the platform position P1 of the fixture 1 may be deeper than the limit position P2 of the residual bone B. Then, the thickness of about at least 3 mm to 4 mm that is the sum of the thickness H2a of the gum A of 1 mm, the thickness H2b of the residual bone B of 1 mm, and the thickness H2c of the lower empty space of the residual bone B of 2 mm may be formed above the platform 60 of the fixture 1.

Next, the fixture stabilizing device 200 for dental implants according to the present embodiment is fastened to the fixture 1. Then, in the present embodiment as well, while securing the thickness of about at least 3 mm to 4 mm above the platform 60 of the fixture 1, the fixture 1 is stably fixed and supported so that a successful implant procedure may be obtained.

Even when the present embodiment is applied, the fixture 1 may be placed in the placement direction D and stably and effectively anchored such that the platform position P1 of the fixture 1 is equal to or at least deeper than the limit position P2 of the residual bone B. Accordingly, the conventional needs to use larger or longer fixtures (not shown), to wait a longer period after bone grafting or maxillary sinus augmentation, to wait until after extraction site heals enough to obtain enough bone density to allow for implant placements, to wait after removal of an existing implant fixture, or to perform multiple surgeries for ideal surgical results may be eliminated so that the inconvenience of patients and procedure operators may be reduced and the success rate of implant procedures may be significantly increased compared to the conventional cases.

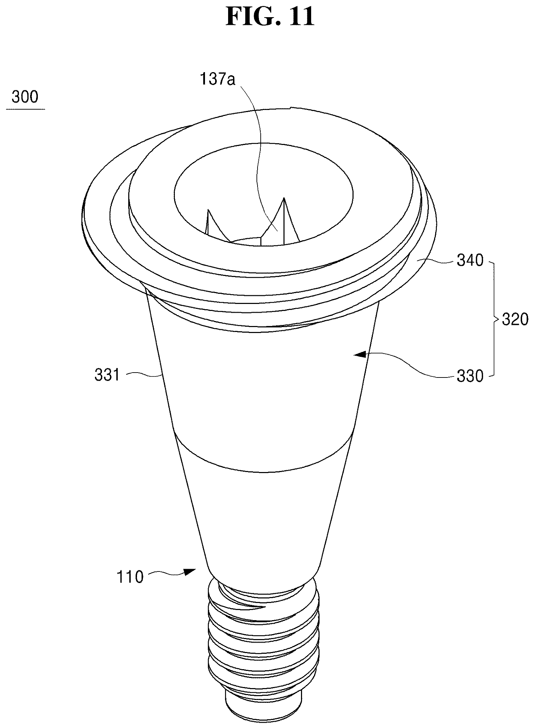

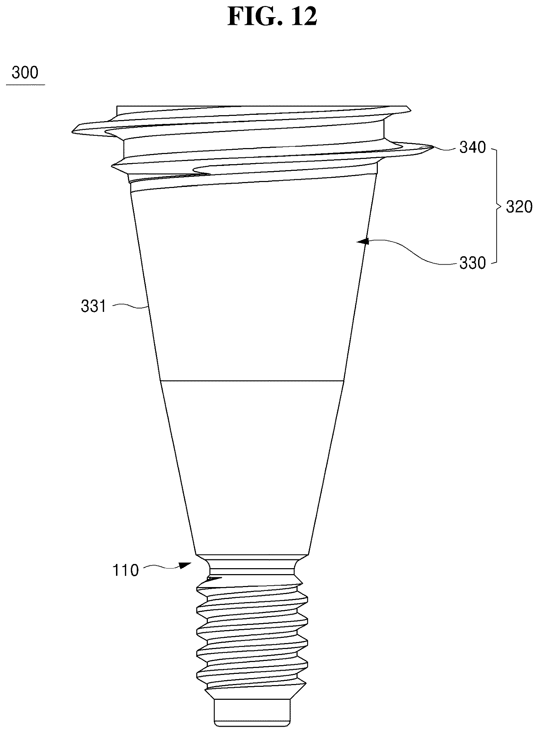

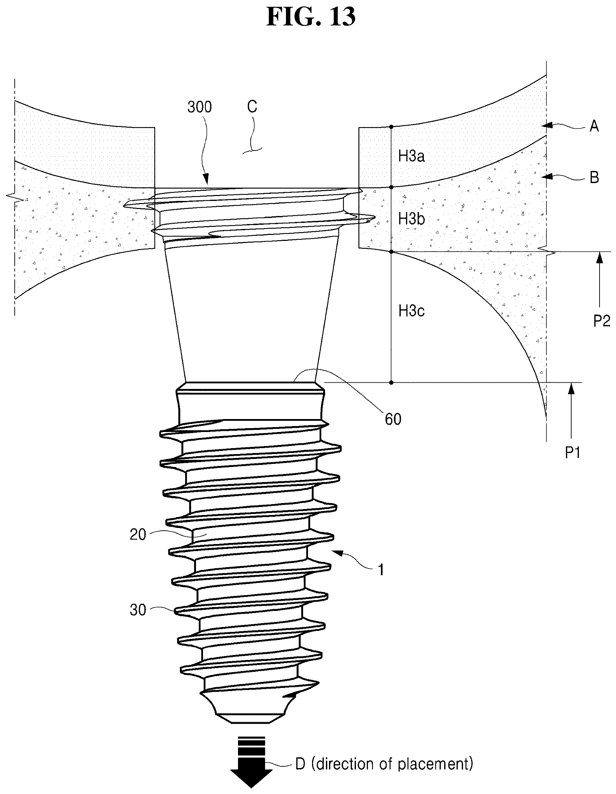

FIG. 11 is a perspective view of a fixture stabilizing device 300 for dental implants according to another embodiment. FIG. 12 is a front view of the fixture stabilizing device 300 for dental implants of FIG. 11. FIG. 13 is a view showing a schematic use state of the fixture stabilizing device 300 for dental implants of FIG. 11.

Referring to these drawings, the fixture stabilizing device 300 for dental implants according to the present embodiment may also include the fixture detachable coupling part 110 detachably coupled to the fixture 1 placed in the alveolar bone during a dental implant procedure, and a residual bone coupling part 320 connected to the fixture detachable coupling part 110 and coupled to the region of the residual bone B forming one side of the gum A at the opposite side of the fixture 1. The structure, function, and role of the fixture detachable coupling part 110 are the same as those of the embodiment described above. Accordingly, redundant descriptions thereof are omitted.

However, the residual bone coupling part 320 applied to the present embodiment differs from the residual bone coupling part 120 of the embodiment described above. In other words, the residual bone coupling part 320 applied to the present embodiment may also include a device body 330 and a residual bone contact support part 340. The residual bone contact support part 340 having a continuous spiral shape is formed only in a partial section of the device body 230.

Furthermore, the device body 330 is relatively longer than the residual bone coupling part 120 of the embodiment described above. The device body 330 may also include a tapered outer wall 331 that is tapered. Due to the tapered outer wall 331, the fixture stabilizing device 300 for dental implants according to the present embodiment may be easily fastened to the fixture 1 and may also secure a space for bones to grow well. The shape of a tool insertion part 137a may change as the shape of the device body 330 varies. The function of the tool insertion part 137a is the same in that the tool insertion part 137a is a location where a tool in inserted, although having a different shape. However, as in the case of the present embodiment, if the tool insertion portion(137a) is large, it may contain a connection for a typical and conventional cover screw or a healing abutment, and in this case, a thread may be formed inside the device body 330 for a such detachable connection.

Hereinafter, the operation of the fixture stabilizing device 300 for dental implants according to the present embodiment is described.

As shown in FIG. 13, even for a patient with the thickness H3a of the gum A of 1 mm and the thickness H3b of the residual bone B thereunder of 1 mm, first, the fixture 1 is placed in the placement direction D such that, while securing a thickness of about at least 3 mm to 4 mm above the platform 60 of the fixture 1, the platform position P1 of the fixture 1 may be deeper than the limit position P2 of the residual bone B. Then, the thickness of about at least 3 mm to 4 mm that is the sum of the thickness H3a of the gum A of 1 mm, the thickness H3b of the residual bone B of 1 mm, and the thickness H3c of the lower empty space of the residual bone B of 2 mm may be formed above the platform 60 of the fixture 1.

Next, the fixture stabilizing device 300 for dental implants according to the present embodiment is fastened to the fixture 1. Then, in the present embodiment as well, while securing the thickness of about at least 3 mm to 4 mm above the platform 60 of the fixture 1, the fixture 1 is stably fixed and supported so that a successful implant procedure may be obtained.

Even when the present embodiment is applied, the fixture 1 may be placed in the placement direction D and stably and effectively anchored such that the platform position P1 of the fixture 1 is equal to or at least deeper than the limit position P2 of the residual bone B. Accordingly, the conventional needs to use larger or longer fixtures (not shown), to wait a longer period after bone grafting or maxillary sinus augmentation, to wait until after extraction site heals enough to obtain enough bone density to allow for implant placements, to wait after removal of an existing implant fixture, or to perform multiple surgeries for ideal surgical results may be eliminated so that the inconvenience of patients and procedure operators may be reduced and the success rate of implant procedures may be significantly increased compared to the conventional cases.

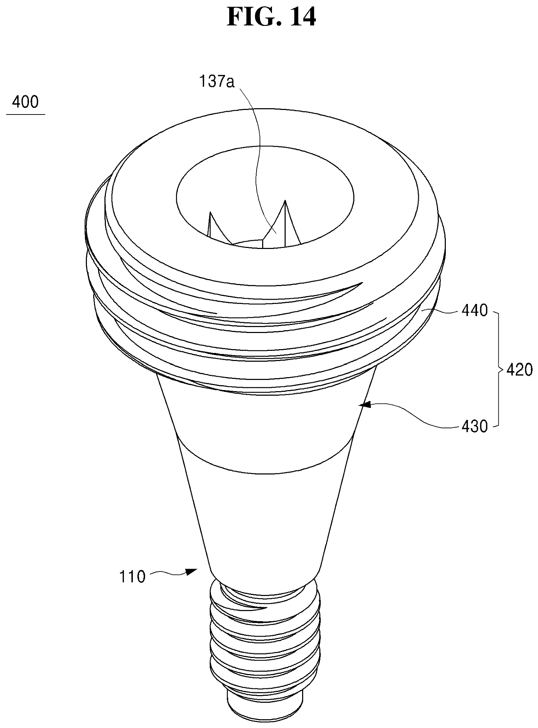

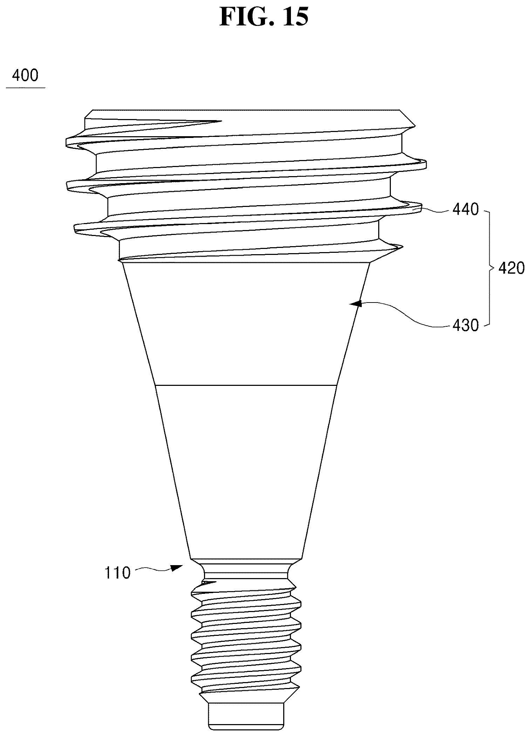

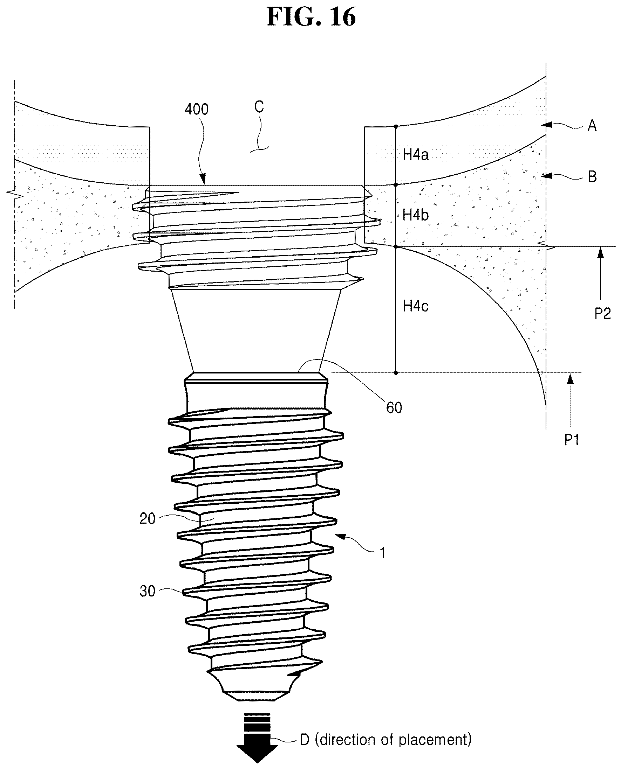

FIG. 14 is a perspective view of a fixture stabilizing device 400 for dental implants according to another embodiment. FIG. 15 is a front view of the fixture stabilizing device 400 for dental implants of FIG. 14. FIG. 16 is a view showing a schematic use state of the fixture stabilizing device 400 for dental implants of FIG. 14.

Referring to these drawings, the fixture stabilizing device 400 for dental implants according to the present embodiment may also include the fixture detachable coupling part 110 detachably coupled to the fixture 1 placed in the alveolar bone during a dental implant procedure, and a residual bone coupling part 420 connected to the fixture detachable coupling part 110 and coupled to the region of the residual bone B forming one side of the gum A at the opposite side of the fixture 1. The structure, function, and role of the fixture detachable coupling part 110 are the same as those of the embodiment described above. Accordingly, redundant descriptions thereof are omitted.

However, the residual bone coupling part 420 applied to the present embodiment differs from the residual bone coupling part 120 of the embodiment described above. In other words, the residual bone coupling part 420 applied to the present embodiment may also include a device body 430 and a residual bone contact support part 440. The residual bone contact support part 440 having a continuous spiral shape is formed on the outer wall of the device body 230 longer than that of embodiment described with reference to FIG. 11. Accordingly, according to the present embodiment, the length of the section where the residual bone contact support part 440 does not exist is shorter than that in the embodiment described with reference to FIG. 11. The shape of the tool insertion part 137a is the same as that in the embodiment described with reference to FIG. 11.

Hereinafter, the operation of the fixture stabilizing device 400 for dental implants according to the present embodiment is described.

As shown in FIG. 13, even for a patient with the thickness H4a of the gum A of 1 mm and the thickness H4b of the residual bone B thereunder of 1 mm, first, the fixture 1 is placed in the placement direction D such that, while securing a thickness of about at least 3 mm to 4 mm above the platform 60 of the fixture 1, the platform position P1 of the fixture 1 may be deeper than the limit position P2 of the residual bone B. Then, the thickness of about at least 3 mm to 4 mm that is the sum of the thickness H4a of the gum A of 1 mm, the thickness H4b of the residual bone B of 1 mm, and the thickness H4c of the lower empty space of the residual bone B of 2 mm may be formed above the platform 60 of the fixture 1.

Next, the fixture stabilizing device 300 for dental implants according to the present embodiment is fastened to the fixture 1. Then, in the present embodiment as well, while securing the thickness of about at least 3 mm to 4 mm above the platform 60 of the fixture 1, the fixture 1 is stably fixed and supported so that a successful implant procedure may be obtained.

Even when the present embodiment is applied, the fixture 1 may be placed in the placement direction D and stably and effectively anchored such that the platform position P1 of the fixture 1 is equal to or at least deeper than the limit position P2 of the residual bone B. Accordingly, the conventional needs to use larger or longer fixtures (not shown), to wait a longer period after bone grafting or maxillary sinus augmentation, to wait until after extraction site heals enough to obtain enough bone density to allow for implant placements, to wait after removal of an existing implant fixture, or to perform multiple surgeries for ideal surgical results may be eliminated so that the inconvenience of patients and procedure operators may be reduced and the success rate of implant procedures may be significantly increased compared to the conventional cases.

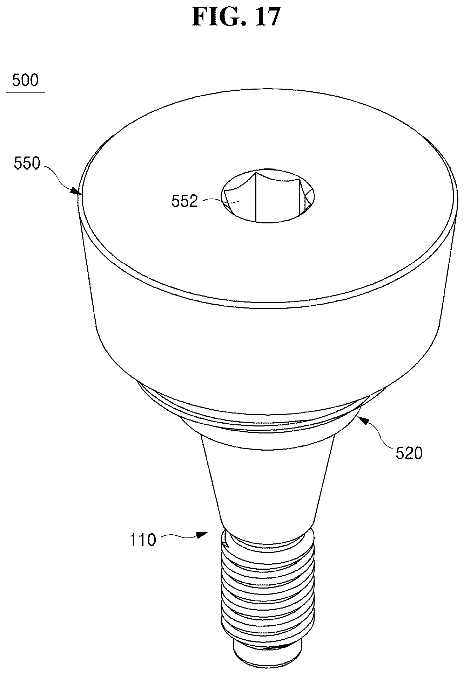

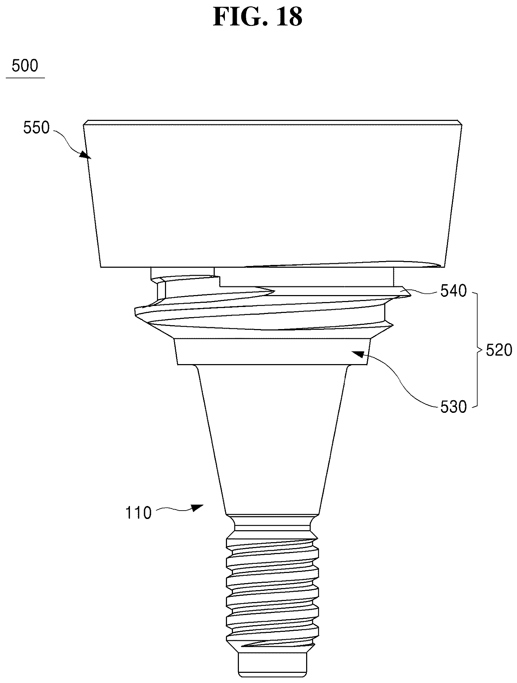

FIG. 17 is a perspective view of a fixture stabilizing device 500 for dental implants according to another embodiment. FIG. 18 is a front view of the fixture stabilizing device 500 for dental implants of FIG. 17.

Referring to these drawings, the fixture stabilizing device 500 for dental implants according to the present embodiment may also include the fixture detachable coupling part 110 detachably coupled to the fixture 1 placed in the alveolar bone during a dental implant procedure, and a residual bone coupling part 520 connected to the fixture detachable coupling part 110 and coupled to the region of the residual bone B forming one side of the gum A at the opposite side of the fixture 1. The structure, function, and role of the fixture detachable coupling part 110 are the same as those of the embodiment described above. Accordingly, redundant descriptions thereof are omitted.

A residual bone coupling part 520 applied to the present embodiment differs from the residual bone coupling part 120 of the embodiment described above. In other words, the residual bone coupling part 520 applied to the present embodiment may also include a device body 530 and a residual bone contact support part 540. The residual bone contact support part 540 having a continuous spiral shape is formed in one or two lines in a partial section of the outer surface of the device body 530.

The fixture stabilizing device 500 for dental implants according to the present embodiment may further include a healing body 550.

The healing body 550 is coupled to the residual bone coupling part 520 and has a structure in which an exposed end portion of the healing body is exposed to the outside of the gum A. When the healing body 550 is formed, as in the residual bone coupling part 120 of the embodiment described above, it is advantageous that the placement hole C (see FIG. 7) is not exposed.

In the healing body 550 applied to the present embodiment, an end surface of the healing body 550 forming the smallest area is greater than an end surface of the residual bone coupling part 520 forming the largest area. In other words, the healing body 550 has the greatest volume in the fixture stabilizing device 500 for dental implants.

The healing body 550 applied to the present embodiment is a tapered healing body 550 with a tapered outer surface. In this case, there are many advantages such as making the fastening of the tapered healing body 550 easier and further facilitating osseointegration.

As in the present embodiment, when the tapered healing body 550 is employed, unlike the embodiments described above, a tool insertion part 552 may be formed in the center area of the tapered healing body 550.

Even when the present embodiment is applied, the fixture 1 may be placed in the placement direction D and stably and effectively anchored such that the platform position P1 of the fixture 1 is equal to or at least deeper than the limit position P2 of the residual bone B. Accordingly, the conventional needs to use larger or longer fixtures (not shown), to wait a longer period after bone grafting or maxillary sinus augmentation, to wait until after extraction site heals enough to obtain enough bone density to allow for implant placements, to wait after removal of an existing implant fixture, or to perform multiple surgeries for ideal surgical results may be eliminated so that the inconvenience of patients and procedure operators may be reduced and the success rate of implant procedures may be significantly increased compared to the conventional cases.

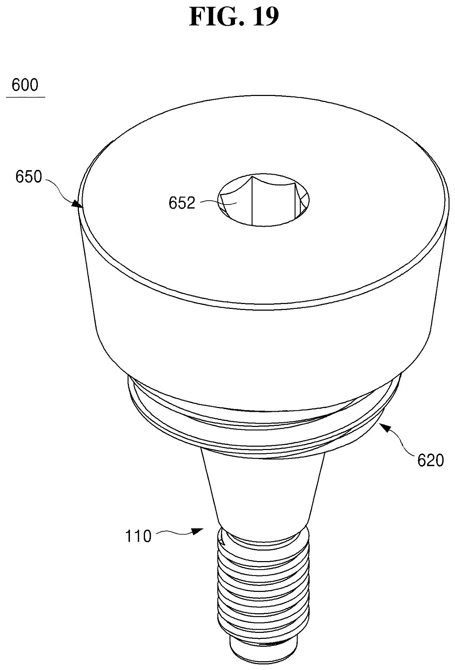

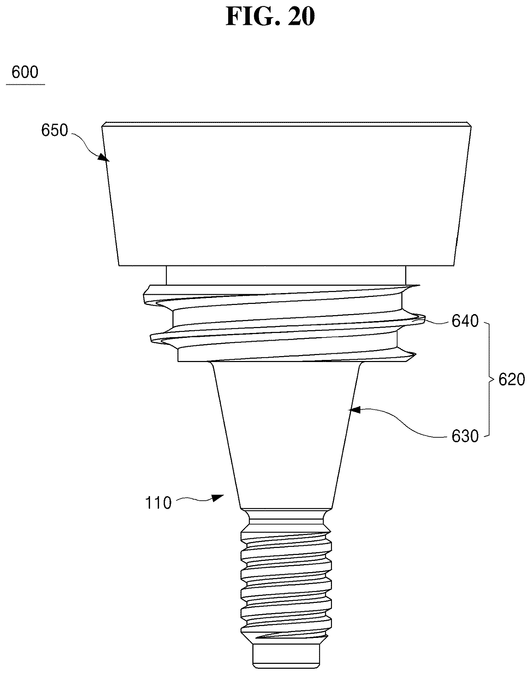

FIG. 19 is a perspective view of a fixture stabilizing device 600 for dental implants according to another embodiment. FIG. 20 is a front view of the fixture stabilizing device 600 for dental implants of FIG. 19.

Referring to these drawings, the fixture stabilizing device 600 for dental implants according to the present embodiment may also include the fixture detachable coupling part 110 detachably coupled to the fixture 1 placed in the alveolar bone during a dental implant procedure, and a residual bone coupling part 620 connected to the fixture detachable coupling part 110 and coupled to the region of the residual bone B forming one side of the gum A at the opposite side of the fixture 1. The structure, function, and role of the fixture detachable coupling part 110 are the same as those of the embodiment described above. Accordingly, redundant descriptions thereof are omitted.

A residual bone contact support part 640 of a residual bone coupling part 620 applied to the present embodiment has a continuous spiral shape formed in the entire section of the outer surface of the device body 630.

The fixture stabilizing device 600 for dental implants according to the present embodiment may also include a healing body 650. The healing body 650 applied to the present embodiment is a tapered healing body 650 with a tapered outer surface with a tapered outer surface tapered. A tool insertion part 652 is formed in the center area of the tapered healing body 650.

Even when the present embodiment is applied, the fixture 1 may be placed in the placement direction D and stably and effectively anchored such that the platform position P1 of the fixture 1 is equal to or at least deeper than the limit position P2 of the residual bone B. Accordingly, the conventional needs to use larger or longer fixtures (not shown), to wait a longer period after bone grafting or maxillary sinus augmentation, to wait until after extraction site heals enough to obtain enough bone density to allow for implant placements, to wait after removal of an existing implant fixture, or to perform multiple surgeries for ideal surgical results may be eliminated so that the inconvenience of patients and procedure operators may be reduced and the success rate of implant procedures may be significantly increased compared to the conventional cases.

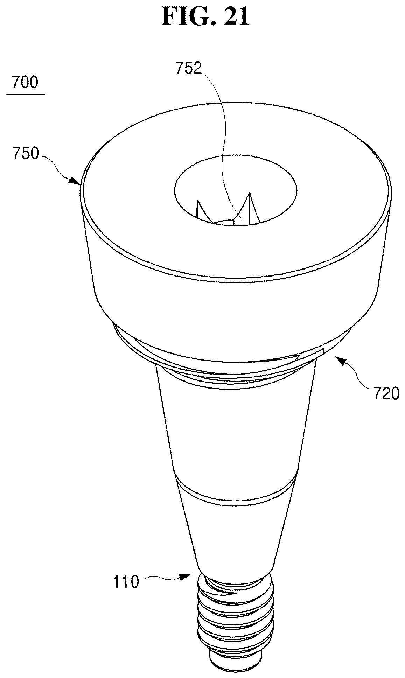

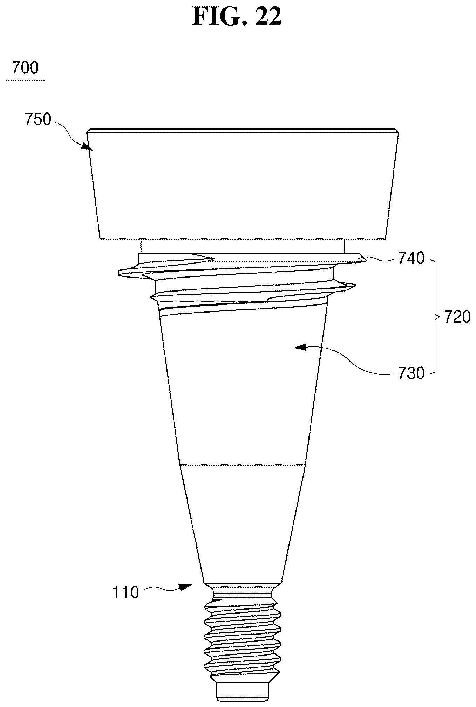

FIG. 21 is a perspective view of a fixture stabilizing device 700 for dental implants according to another embodiment. FIG. 22 is a front view of the fixture stabilizing device 700 for dental implants of FIG. 21.

Referring to these drawings, the fixture stabilizing device 700 for dental implants according to the present embodiment may also include the fixture detachable coupling part 110 detachably coupled to the fixture 1 placed in the alveolar bone during a dental implant procedure, and a residual bone coupling part 720 connected to the fixture detachable coupling part 110 and coupled to the region of the residual bone B forming one side of the gum A at the opposite side of the fixture 1. The structure, function, and role of the fixture detachable coupling part 110 are the same as those of the embodiment described above. Accordingly, redundant descriptions thereof are omitted.

A residual bone contact support part 740 of a residual bone coupling part 720 applied to the present embodiment is formed in one or two lines in a partial section of the outer surface of a device body 730. In this state, the device body 730 is longer than those described above in the embodiments shown in FIGS. 17 and 19.

The fixture stabilizing device 700 for dental implants according to the present embodiment may also include a healing body 750. The healing body 750 applied to the present embodiment is also a tapered he healing body 750 with a tapered outer surface. A tool insertion part 752 is formed in the center area of the tapered healing body 750.

Even when the present embodiment is applied, the fixture 1 may be placed in the placement direction D and stably and effectively anchored such that the platform position P1 of the fixture 1 is equal to or at least deeper than the limit position P2 of the residual bone B. Accordingly, the conventional needs to use larger or longer fixtures (not shown), to wait a longer period after bone grafting or maxillary sinus augmentation, to wait until after extraction site heals enough to obtain enough bone density to allow for implant placements, to wait after removal of an existing implant fixture, or to perform multiple surgeries for ideal surgical results may be eliminated so that the inconvenience of patients and procedure operators may be reduced and the success rate of implant procedures may be significantly increased compared to the conventional cases.

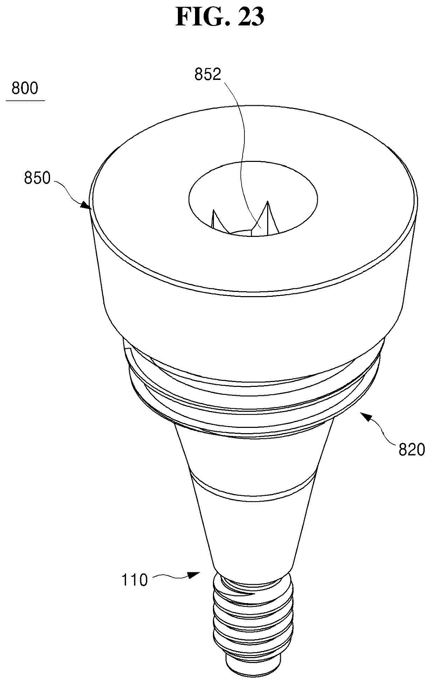

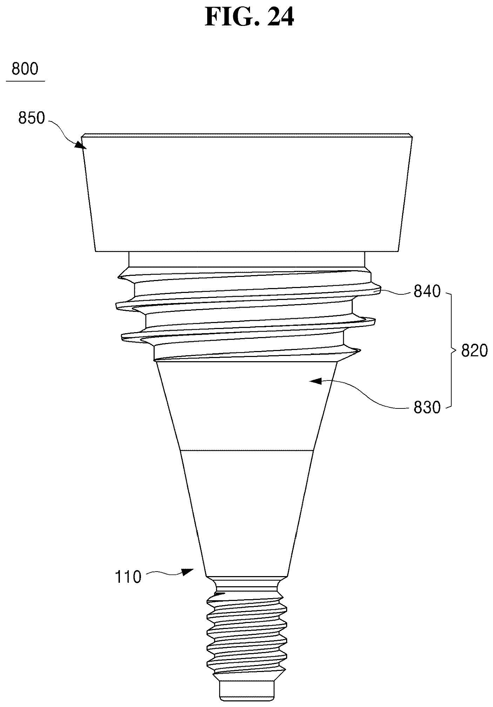

FIG. 23 is a perspective view of a fixture stabilizing device 800 for dental implants according to another embodiment. FIG. 24 is a front view of the fixture stabilizing device 800 for dental implants of FIG. 23.

Referring to these drawings, the fixture stabilizing device 800 for dental implants according to the present embodiment may also include the fixture detachable coupling part 110 detachably coupled to the fixture 1 placed in the alveolar bone during a dental implant procedure, and a residual bone coupling part 820 connected to the fixture detachable coupling part 110 and coupled to the region of the residual bone B forming one side of the gum A at the opposite side of the fixture 1. The structure, function, and role of the fixture detachable coupling part 110 are the same as those of the embodiment described above. Accordingly, redundant descriptions thereof are omitted.

A residual bone contact support part 840 of a residual bone coupling part 820 applied to the present embodiment is formed in three or four lines in a partial section of the outer surface of a device body 830. Accordingly, a section of the device body 830 where the residual bone contact support part 840 is not formed is shorter than that in the embodiment shown in FIG. 21.

The fixture stabilizing device for dental implants according to the present embodiment may include a healing body 850. The healing body 850 applied to the present embodiment is a tapered healing body 850 with a tapered outer surface. A tool insertion part 852 is formed in the center area of the tapered the healing body 850.

According to the present embodiment, the fixture 1 may be placed in the placement direction D and stably and effectively anchored such that the platform position P1 of the fixture 1 is equal to or at least deeper than the limit position P2 of the residual bone B. Accordingly, the conventional needs to use larger or longer fixtures, to wait a longer period after bone grafting or maxillary sinus augmentation, to wait until after extraction site heals enough to obtain enough bone density to allow for implant placements, to wait after removal of an existing implant fixture, or to perform multiple surgeries for ideal surgical results may be eliminated so that the inconvenience of patients and procedure operators may be reduced and the success rate of implant procedures may be significantly increased compared to the conventional cases

As such, while this disclosure has been particularly shown and described with reference to embodiments thereof, it will be understood by those of ordinary skill in the art that various changes in form and details may be made therein without departing from the spirit and scope of the disclosure as defined by the appended claims.

The embodiments should be considered in descriptive sense only and not for purposes of limitation. Therefore, the scope of the disclosure is defined not by the detailed description of the disclosure but by the appended claims, and all differences within the scope will be construed as being included in the disclosure.

## Claims

1. A fixture stabilizing device for dental implants, the fixture stabilizing device comprising:
a fixture detachable coupling part detachably coupled to a fixture placed in an alveolar bone during a dental implant procedure; and
a residual bone coupling part connected to the fixture detachable coupling part and coupled to a region of a residual bone forming one side of gum at an opposite side of the fixture.

2. The fixture stabilizing device for dental implants of claim 1, wherein the fixture is placed such that a platform position of the fixture is equal to or at least deeper than a limit position of the residual bone, and
the fixture detachable coupling part is coupled to the fixture placed at a corresponding position and the residual bone coupling part is coupled to the region of the residual bone so as to fix and support the fixture.

3. The fixture stabilizing device for dental implants of claim 1, wherein the residual bone coupling part comprises:
a device body inserted through a placement hole, through which the fixture is placed, and arranged in the residual bone; and
a residual bone contact support part formed on an outer surface of the device body and supported by contact with the residual bone.

4. The fixture stabilizing device for dental implants of claim 3, wherein the residual bone contact support part is processed to protrude outwards from the outer surface of the device body in a radius direction to have a continuous spiral shape.

5. The fixture stabilizing device for dental implants of claim 4, wherein the residual bone contact support part having a continuous spiral shape is formed to have a thread width gradually decreasing toward the fixture detachable coupling part.

6. The fixture stabilizing device for dental implants of claim 2, wherein the residual bone contact support part is formed in a partial section of an outer surface of the device body.

7. The fixture stabilizing device for dental implants of claim 2, wherein the residual bone contact support part is formed in an entire section of an outer surface of the device body.

8. The fixture stabilizing device for dental implants of claim 3, wherein an end surface forming a smallest area in the device body is greater than an end surface of the residual bone coupling part forming a largest area.

9. The fixture stabilizing device for dental implants of claim 3, wherein the outer surface of the device body has a non-linear shape.

10. The fixture stabilizing device for dental implants of claim 3, wherein at least a partial section of the outer surface of the device body forms a tapered outer wall with a cross-sectional area gradually decreasing toward the fixture detachable coupling part.

11. The fixture stabilizing device for dental implants of claim 3, wherein a tool insertion part, into which a tool for fastening the fixture detachable coupling part to the fixture is inserted, is formed in a central area of an end portion of the device body.

12. The fixture stabilizing device for dental implants of claim 3, wherein an end portion of the device body in contact with the fixture detachable coupling part forms a platform contact support part that is supported by contact with a platform of the fixture.

13. The fixture stabilizing device for dental implants of claim 1, wherein an exposed end portion of the residual bone coupling part is arranged in the residual bone.

14. The fixture stabilizing device for dental implants of claim 1, further comprising a healing body that is coupled to the residual bone coupling part and arranged such that an exposed end portion of the healing body is exposed to outside the gum.

15. The fixture stabilizing device for dental implants of claim 14, wherein an end surface forming a smallest area of the healing body is greater than an end surface forming a largest area of the residual bone coupling part.

16. The fixture stabilizing device for dental implants of claim 14, wherein the healing body comprises a tapered healing body with a tapered outer surface.

17. The fixture stabilizing device for dental implants of claim 1, wherein the fixture detachable coupling part comprises a threaded coupling part that is formed inside a body part of the fixture and coupled in a screw-like manner to a threaded coupling section of a device coupling part to which the fixture detachable coupling part is detachably coupled.

18. The fixture stabilizing device for dental implants of claim 17, wherein the fixture detachable coupling part further comprises an unthreaded coupling part that is coupled to an unthreaded coupling section of the device coupling part formed inside the body part of the fixture to be pressed by contact with the unthreaded coupling section.

19. The fixture stabilizing device for dental implants of claim 18, wherein the unthreaded coupling part has a conic shape with a cross-sectional area gradually decreasing toward the threaded coupling part.

20. The fixture stabilizing device for dental implants of claim 18, wherein the fixture detachable coupling part comprises:
a connection part connecting the threaded coupling part to the unthreaded coupling part; and
an unthreaded protruding portion forming an end portion of the threaded coupling part and being unthreaded.
